# EUROPÄISCHE PATENTSCHRIFT

(11) **EP 0 561 834 B1**
(45) Veröffentlichungstag und Bekanntmachung des Hinweises auf die Patenterteilung: **31.08.1994**
(21) Anmeldenummer: 91920732.4
(22) Anmeldetag: 29.11.1991
(51) Int. Cl.: B62D 25/04, B62D 29/00

(54) **KRAFTFAHRZEUG MIT EINER DURCH EIN STRANGPRESSPROFIL GEBILDETEN MITTELSÄULE**
MOTOR VEHICLE WITH A CENTRAL PILLAR CONSTITUTED BY AN EXTRUDED SECTION
VEHICULE AVEC UNE COLONNE CENTRALE CONSTITUEE D'UN PROFILE EXTRUDE

(30) Priorität: 20.12.1990 DE 4041038
(43) Veröffentlichungstag der Anmeldung: 29.09.1993
(73) Patentinhaber: AUDI AG, 85002 Ingolstadt (DE)
(72) Erfinder: ENNING, Norbert, D-8071 Denkendorf (DE); TIMM, Heinrich, D-8070 Ingolstadt (DE)
(74) Vertreter: Engelhardt, Harald
(86) Internationale Anmeldenummer: EP9102263
(87) Internationale Veröffentlichungsnummer: WO9211157

(56) Entgegenhaltungen:
- WO-A-90/04534
- CH-A- 212 963
- FR-A- 847 853
- FR-A- 2 333 691
- GB-A- 596 984
- US-A- 2 539 050

## Beschreibung

Die Erfindung bezieht sich auf ein Kraftfahrzeug, insbesondere einen Personenkraftwagen, mit einer durch ein Strangpreßprofil gebildeten Mittelsäule gemäß dem Oberbegriff des Patentanspruchs 1.

Personenkraftwagen mit einer durch ein Strangpreßprofil gebildeten Mittelsäule, welche an ihrem oberen Ende mit einem Dachholm und mit ihrem unteren Ende mit einem Längsträger des Fahrzeuges verbunden ist, sind allgemein bekannt. Mittelsäulen, die aus einem Strangpreßprofil bestehen, weisen aufgrund des Strangpreßverfahrens einen gleichbleibenden Querschnitt auf.

Der Erfindung liegt die Aufgabe zugrunde, eine Mittelsäule, umfassend ein Strangpreßprofil, so auszubilden, daß eine gute Krafteinleitung von dem Strangpreßprofil in den Längsträger des Fahrzeuges gegeben ist und die Steifigkeit bei einem Seitenaufprall erhöht wird.

Die Aufgabe wird durch die Merkmale des Patentanspruchs 1 gelöst.

Die vorgeschlagene Mittelsäule ist aus einem ersten und einem zweiten Strangpreßprofil zusammengesetzt, welche in Fahrzeuglängsrichtung hintereinander angeordnet sind. Das erste Strangpreßprofil schließt mit dem zweiten Strangpreßprofil einen spitzen Winkel α ein, derart, daß sich die Mittelsäule nach oben konisch verjüngt. Durch die konische Ausbildung der Mittelsäule, welche an sich bei Blechkonstruktionen bekannt ist, wird erreicht, daß trotz des Einsatzes von Strangpreßprofilen eine gute Krafteinleitung in den Längsträger des Fahrzeuges gegeben ist. Außerdem wird die Mittelsäule im Anschlußbereich an den Längsträger des Fahrzeuges verstärkt, also in demjenigen Bereich, der bei einem Seitenaufprall gewöhnlich die größten Kräfte aufzunehmen hat.

Zur Erzielung der konisch ausgestalteten Mittelsäule ist gemäß der Erfindung das erste Stangpreßprofil über einen großen Teil seiner Länge entsprechend dem Winkel α beschnitten. Bei der Herstellung der Mittelsäule wird das erste Strangpreßprofil mit seiner Schnittfläche an das zweite Strangpreßprofil angefügt. Die Verbindung der beiden Strangpreßprofile erfolgt in deren Anlagebereich, zweckmäßig durch Schweißung.

Eine aus Strangpreßprofilen gebildete Mittelsäule erfordert - im Gegensatz zu Blechkonstruktionen - nur geringe Investitionskosten. Bei der vorgeschlagenen Mittelsäule kommt der Vorteil hinzu, daß bei einer technischen oder optischen Änderung ggf. nur eines der beiden Strangpreßprofile abgeändert werden muß, währenddessen das zweite Strangpreßprofil unverändert übernommen werden kann. Durch diese Maßnahme ist es auch möglich, bei verschiedenen Aufbauvarianten eines der beiden die Mittelsäule bildenden Strangpreßprofile beizubehalten. Durch unterschiedliche Ausgestaltung des anderen Strangpreßprofils läßt sich dann die gewünschte Differenzierung erzeugen. Je nach dem Beschnitt des ersten Strangpreßprofils läßt sich eine insgesamt sehr breite oder aber auch eine sehr schlanke konische Mittelsäule erzeugen. Wenn das erste Strangpreßprofil einen sehr spitzen Winkel aufweist, so daß sich die Schnittfläche fast über den gesamten Abstand zwischen dem Dachholm und dem Längsträger erstreckt, ergibt sich eine sehr schlanke Mittelsäule, während bei einem größeren Winkel die beiden Strangpreßprofile auseinanderlaufen, so daß der dazwischen entstehende Spalt durch geeignete Mittel zu überbrücken ist. Diese Abdeckung kann beispielsweise durch ein Leichtmetallblech bestehen, welches mit den Strangpreßprofilen verschweißt ist.

Die Strangpreßprofile können die Außenhaut des Fahrzeuges bilden, da im Strangpreßverfahren Leichtmetalle bzw. Leichtmetallegierungen mit einer sehr glatten Oberfläche erzeugt werden können. Da die Strangpreßprofile an der Fahrzeugaußenseite miteinander verbunden werden müssen, was zweckmäßig durch Schweißung geschieht, sind diese Stellen zu bearbeiten oder durch Abdeckungen zu verkleiden. Es sind jedoch auch Lösungen denkbar, bei denen die Mittelsäule nicht die Außenhaut bildet, sondern durch die beiden Seitentüren abgedeckt ist, so daß die Bearbeitung ggf. entfallen kann.

Die Strangpreßprofile können in ihren Seitenbereichen zur Aufnahme von Dichtungen Flansche aufweisen. Die Befestigung der Mittelsäule am Dachholm bzw. Längsträger kann durch Schweißen oder durch eine lösbare Verbindung erfolgen. Bei der letztgenannten Befestigungsart ist die Möglichkeit gegeben, beim Montagevorgang des Fahrzeuges die Mittelsäule erst zu einem späteren Zeitpunkt zu montieren, um vorher mit Handhabungsautomaten größere Innenausstattungsteile von der Seite her in das Fahrzeuginnere einführen und montieren zu können. Besonders vorteilhaft ist, wenn der dem Längsträger zugewandte Endbereich zumindest eines Strangpreßprofiles in einer Biegung ausläuft und zur Anlage und Befestigung am Längsträger spitzwinkelig beschnitten ist. Dadurch läßt sich eine besonders günstige Krafteinleitung von der Mittelsäule in den Längsträger erreichen.

Der Übergang von einer Mittelsäule in den Längsträger ist bei aus Blechpreßteilen zusammengesetzten Fahrzeugkarosserien allgemein bekannt, beispielsweise aus der DE-OS 21 64 705. Eine Lösung mit einem einstückig hergestellten Profil ist in dem DE-GM 87 17 616 beschrieben. Diese Druckschrift beschreibt einen Türrahmen an Nutzfahrzeugen, wobei das einen Vertikalträger bildende Profil im Anschlußbereich an einen Horizontalträger aufgespalten ist und sich zumindest einer der beiden dadurch entstandenen Endbereiche an den Horizontalträger anschmiegt und mit diesem verbunden ist. Durch das Aufspalten, insbesondere wenn dabei noch wie bei dem Ausführungsbeispiel gemäß dem DE-GM 87 17 616 ein Abschnitt herausgetrennt ist, wird die Festigkeit reduziert. Gleichzeitig erfordert diese Vorgehensweise zusätzlichen Arbeitsaufwand.

Gemäß einer vorteilhaften Weiterbildung der Erfindung kann der dem Längsträger zugewandte Endbereich zumindest eines Strangpreßprofiles den Längsträger etwa rechtwinkelig durchdringen und am Boden des Längsträgers befestigt sein. Mittels der Durchdringung wird das Strangpreßprofil über einen längeren Bereich an dem Längsträger gehalten. Die Befestigung des Strangpreßprofilendes am Boden des Längsträgers gewährleistet eine höhere Festigkeit. Wenn die Verbindung mittels Schweißung geschieht und die Schweißung nicht am Ende, sondern im Abstand dazu erfolgt, wird durch die Schweißung die Festigkeit des gewöhnlich aus Leichtmetall hergestellten Strangprofiles herabgesetzt.

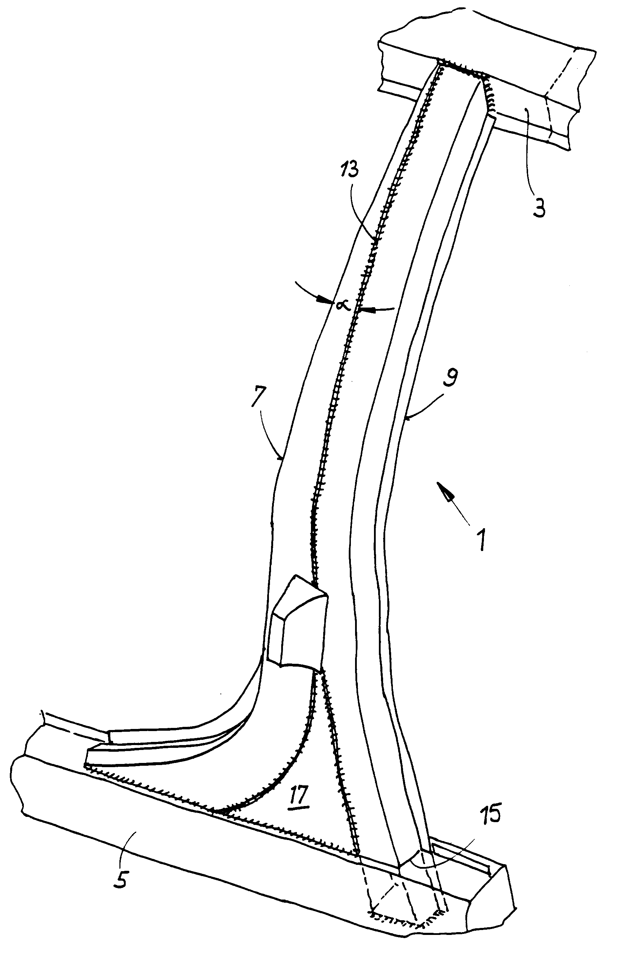

Ein Ausführungsbeispiel der Erfindung ist in der Zeichnung dargestellt und wird nachfolgend näher beschrieben.

Die Zeichnung zeigt in perspektivischer Ansicht die Mittelsäule 1 eines Personenkraftwagens. Das obere Ende der Mittelsäule 1 ist durch Schweißung mit einem Dachholm 3 (nur abschnittsweise dargestellt) des Personenkraftwagens verbunden. Der untere Bereich der Mittelsäule 1 wird von einem Längsträger 5, gewöhnlich als Türschweller bezeichnet, aufgenommen.

Wie die Zeichnung deutlich zeigt, setzt sich die Mittelsäule 1 aus einem ersten Strangpreßprofil 7 und einem zweiten Strangpreßprofil 9 zusammen. Beide Strangpreßprofile bestehen aus einer Leichtmetallegierung.

Das zweite Strangpreßprofil ist nicht spanend bearbeitet; es wird nur abgelängt und gebogen. Ein Flansch 11 zur Aufnahme eines Dichtelements ist einstückig an das Strangpreßprofil 9 angeformt.

Das erste Strangpreßprofil 7 ist über die Hälfte der Länge unter einem Winkel α spitzwinkelig beschnitten. Die dadurch entstandene Schnittfläche 13 liegt am zweiten Strangpreßprofil 9 an. Beide Strangpreßprofile sind durch Schweißung miteinander verbunden und bilden die Mittelsäule 1.

Die Befestigungen des ersten Strangpreßprofiles 7 und des zweiten Strangpreßprofiles 9 an dem Längsträger 5 geschieht auf unterschiedliche Weise. Zur guten Krafteinleitung ist der dem Längsträger 5 zugewandte Endbereich des ersten Strangpreßprofiles 9 gebogen und zur Anlage und Befestigung am Längsträger 5 spitzwinkelig beschnitten. Das Strangpreßprofil 7 und der Längsträger 5 sind durch Schweißung miteinander verbunden.

Das zweite Strangpreßprofil 9 ist durch eine Aussparung 15 in dem Längsträger 5 hindurchgeführt und reicht bis zu dessen Boden. Mit diesem ist das Ende des Strangpreßprofiles 9 verschweiß.

Ein aus Leichtmetall bestehendes Blech 17 schließt den etwa dreieckförmigen Raum zwischen den unteren Bereichen des ersten Strangpreßprofiles 7 und des zweiten Strangpreßprofiles 9 und erhöht dadurch gleichzeitig die Festigkeit.

Im Rahmen der Erfindung ist es natürlich ohne weiteres möglich, auch beide Strangpreßprofile, sowohl im Bereich des Dachholmes 3, als auch im Bereich des Längsträgers 5 unter Bildung einer Biegung anzuschließen. Je nach den gegebenen baulichen Möglichkeiten kann alternativ auch das eine oder andere Strangpreßprofil stumpf angeschlossen werden bzw. durch eine Aussparung in dem aufnehmenden Bauteil hindurchgeführt sein.

## Patentansprüche

1. Kraftfahrzeug, insbesondere Personenkraftwagen, mit einer durch ein Strangpreßprofil gebildeten Mittelsäule, welche an ihrem oberen Ende mit einem Dachholm und mit ihrem unteren Ende mit einem Längsträger des Kraftfahrzeuges verbunden ist, gekennzeichnet durch folgende Merkmale:
a) die Mittelsäule (1) ist aus einem ersten und einem zweiten, Strangpreßprofil (7 bzw. 9) zusammengesetzt, welche in Fahrzeuglängsrichtung hintereinander angeordnet sind,
b) das erste Strangpreßprofil (7) schließt mit dem zweiten Strangpreßprofil (9) einen spitzen Winkel α ein, derart, daß sich die Mittelsäule (1) nach oben konisch verjüngt,
c) das erste Strangpreßprofil (7) ist über einen großen Teil seiner Länge entsprechend dem Winkel α beschnitten,
d) das erste Strangpreßprofil (7) liegt mit der Schnittfläche (13) an dem zweiten Strangpreßprofil (9) an,
e) die Strangpreßprofile (7, 9) sind im Anlagebereich miteinander verbunden,
f) der dem Längsträger (5) zugewandte Endbereich zumindest eines Strangpreßprofiles (7) läuft in einer Biegung aus und ist zur Anlage und Befestigung am Längsträger (5) spitzwinkelig beschnitten.

2. Kraftfahrzeug, insbesondere Personenkraftwagen, mit einer durch ein Strangpreßprofil gebildeten Mittelsäule, welche an ihrem oberen Ende mit einem Dachholm und mit ihrem unteren Ende mit einem Längsträger des Kraftfahrzeuges verbunden ist, gekennzeichnet durch folgende Merkmale:
a) die Mittelsäule (1) ist aus einem ersten und einem zweiten, Strangpreßprofil (7 bzw. 9) zusammengesetzt, welche in Fahrzeuglängsrichtung hintereinander angeordnet sind,
b) das erste Strangpreßprofil (7) schließt mit dem zweiten Strangpreßprofil (9) einen spitzen Winkel α ein, derart, daß sich die Mittelsäule (1) nach oben konisch verjüngt,
c) das erste Strangpreßprofil (7) ist über einen großen Teil seiner Länge entsprechend dem Winkel α beschnitten,
d) das erste Strangpreßprofil (7) liegt mit der Schnittfläche (13) an dem zweiten Strangpreßprofil (9) an,
e) die Strangpreßprofile (7, 9) sind im Anlagebereich miteinander verbunden,
f) der dem Längsträger (5) zugewandte Endbereich zumindest eines Strangpreßprofiles (9) durchdringt den Längsträger (5) etwa rechtwinkelig und ist am Boden des Längsträgers (5) befestigt.

3. Kraftfahrzeug nach Anspruch 1 oder 2, dadurch gekennzeichnet, daß im Anschlußbereich der Strangpreßprofile (7, 9) an den Längsträger (5) in dem Raum zwischen diesen Bauteilen ein Schließblech (17) angeordnet ist.

## Claims

1. Motor vehicle, more particularly a passenger car, having a centre pillar constituted by an extruded section joined at its top end to a roof spar and at its bottom end to a side-member of the motor vehicle, characterized by the following features:
a) the centre pillar (1) is composed of a first and a second extruded section (7 and 9 respectively) arranged one behind the other in the longitudinal direction of the vehicle,
b) the first extruded section (7) encloses an acute angle α with the second extruded section (9), such that the centre pillar (1) tapers conically upwards,
c) over a large part of its length the first extruded section (7) is trimmed in accordance with the angle α,
d) the first extruded section (7) bears by the cut surface (13) against the second extruded section (9),
e) the extruded sections (7, 9) are joined together in the contact region,
f) in the case of at least one extruded section (7) the end region nearest the side-member (5) terminates in a bend and is trimmed at an acute angle for contact with and attachment to the side-member (5).

2. Motor vehicle, more particularly a passenger car, having a centre pillar constituted by an extruded section joined at its top end to a roof spar and at its bottom end to a side-member of the motor vehicle, characterised by the following features:
a) the centre pillar (1) is composed of a first and a second extruded section (7 and 9 respectively) arranged one behind the other in the longitudinal direction of the vehicle,
b) the first extruded section (7) encloses an acute angle α with the second extruded section (9), such that the centre pillar (1) tapers conically upwards,
c) over a large part of its length the first extruded section (7) is trimmed in accordance with the angle α,
d) the first extruded section (7) bears by the cut surface (13) against the second extruded section (9),
e) the extruded sections (7, 9) are joined together in the contact region,
f) in the case of at least one extruded section (9) the end region nearest the side-member (5) passes through the side-member (5) more or less at a right angle and is fastened to the floor of the side-member (5).

3. Motor vehicle according to claim 1 or 2, characterised in that in the area where the extruded sections (7, 9) are joined to the side-member (5), a closure plate (17) is arranged in the space between said parts.

## Revendications

1. Véhicule automobile, en particulier voiture particulière, comportant un montant médian constitué par un profilé filé qui est joint, par son extrémité supérieure, à un support de toit et, par son extrémité inférieure, à un longeron de la voiture, caractérisé en ce que
a) le montant médian (1) est constitué par un premier profité filé et un second profité filé (7, 9) qui sont disposés l'un derrière l'autre dans la direction longitudinale de la voiture,
b) le premier profité filé (7) forme, avec le second profité filé (9), un angle aigu α, de sorte que le pilier médian (1) s'amincit vers le haut en pointe,
c) le premier profité filé (7) est rogné sur une grande partie de sa longueur suivant l'angle α,
d) le premier profité filé (7) est appliqué, par sa surface rognée (13), contre le second profité filé
e) les profilés filés (7, 9) sont unis l'un à l'autre dans la région où ils sont appliqués l'un contre l'autre,
f) la partie d'extrémité de l'un au moins des profilés filés (7), du côté du longeron (5), se courbe et est coupée à angle aigu pour son application et sa fixation au longeron (5).

2. Véhicule automobile, en particulier voiture particulière, comportant un montant médian constitué par un profité filé qui est joint, par son extrémité supérieure, à un support de toit et, par son extrémité inférieure, à un longeron de la voiture, caractérisé en ce que
a) le montant médian (1) est constitué par un premier profité filé et un second profité filé (7, 9) qui sont disposés l'un derrière l'autre dans la direction longitudinale de la voiture,
b) le premier profilé filé (7) forme, avec le second profité filé (9), un angle aigu α, de sorte que le pilier médian (1) s'amincit vers le haut en pointe,
c) le premier profilé filé (7) est rogné sur une grande partie de sa longueur suivant l'angle α,
d) le premier profité filé (7) est appliqué, par sa surface rognée (13), contre te second profilé filé (9).
e) les profilés filés (7, 9) sont unis l'un à l'autre dans la région où ils sont appliqués l'un contre l'autre,
f) la partie d'extrémité de l'un au moins des profilés filés (9), du côté du longeron (5), traverse le longeron (5) à peu près à angle droit et est fixée au côté inférieur du longeron (5).

3. Véhicule automobile selon la revendication 1 ou 2, caractérisé en ce qu'une tôle de recouvrement (17) est disposée dans la région de raccordement des profilés filés (7, 9) au longeron (5), dans l'espace entre ces éléments de construction.
